# FASCICULE DE BREVET EUROPEEN

(11) **EP 3 736 642 B1**
(45) Date de publication et mention de la délivrance du brevet: **25.01.2023**
(21) Numéro de dépôt: 19173328.6
(22) Date de dépôt: 08.05.2019
(51) Int. Cl.: G04B 37/11, G04B 37/08

(54) **BOITE DE MONTRE ETANCHE**
WASSERDICHTES ARMBANDUHRGEHÄUSE
WATERTIGHT WATCH CASE

(43) Date de publication de la demande: 11.11.2020
(73) Titulaire: Omega SA, 2502 Biel/Bienne (CH)
(72) Inventeur: KALTENRIEDER, Cédric, 2608 Courtelary (CH); KISSLING, Gregory, 2520 La Neuveville (CH); WINKLER, Yves, 3185 Schmitten (CH); RAMSAY, John, PL20 6PL Meavy (GB)
(74) Mandataire: ICB SA

(56) Documents cités:
- EP-A1- 2 182 416
- EP-A1- 3 163 380
- CH-A- 217 284
- CH-A- 234 391
- CH-A- 378 792
- CH-A- 387 549
- CH-A- 516 188
- GB-A- 1 153 764
- JP-A- S53 124 473
- US-A- 4 104 867

## Description

### DOMAINE TECHNIQUE

La présente invention concerne une boîte de montre étanche notamment pour une montre de plongée.

### ARRIERE-PLAN TECHNOLOGIQUE

Pour prévoir l'utilisation d'une montre mécanique ou électronique sous l'eau, la boîte de montre, qui comprend un mouvement horloger ou un module horloger à base de temps, doit être fermée de manière bien étanche. Pour ce faire, la boîte de montre comprend un fond fixé de manière étanche à un premier côté d'une carrure et une glace fixée à un second côté opposé de la carrure. Des garnitures d'étanchéité sont prévues à l'assemblage du fond, de la carrure et de la glace de montre. Un organe de contrôle ou réglage de fonctions de la montre est monté également de manière étanche à travers la carrure de la boîte en position de repos.

Généralement des boîtes de montre ne sont pas configurées ou assemblées pour supporter de fortes pressions d'eau par exemple lors d'une plongée étant donné que la pression à l'intérieur de la boîte de montre est proche de la pression atmosphérique. De simples garnitures d'étanchéité de montres traditionnelles ne suffisent pas pour garantir une bonne étanchéité à l'eau de la boîte lors d'une plongée à de très grandes profondeurs sous l'eau.

On peut citer la demande de brevet CH 690 870 A5 qui décrit une boîte de montre étanche. La boîte de montre est constituée d'une glace fixée d'un côté supérieur à une carrure-lunette et d'un fond fixé à la carrure en le vissant à un taraudage intérieur de la carrure. La glace est fixée à la carrure par une garniture d'étanchéité annulaire de forme torique et en appui sur un bord de carrure. Une garniture d'étanchéité est aussi prévue entre un bord extérieur du fond et une surface inférieure de la carrure. Comme à forte pression d'eau le taraudage peut s'abîmer, il est encore prévu une cuvette en métal résistant en appui contre une surface intérieure du fond et contre un rebord intérieur de la carrure. Cependant même avec un tel agencement de boîte de montre, cela ne permet pas de garantir une bonne étanchéité de la boîte lors d'une plongée à de très grandes profondeurs sous l'eau, ce qui constitue un inconvénient.

Le brevet CH 372 606 décrit une boîte de montre étanche, qui a une partie centrale ou carrure entourant un fond et fermée par une glace. Une bague filetée est en appui contre une surface extérieure inclinée du fond pour le retenir, et est vissée à une partie de fixation connectée à la carrure. Avec un tel agencement présenté, cela ne permet pas de garantir une bonne étanchéité de la boîte lors d'une plongée à de très grandes profondeurs sous l'eau, ce qui constitue un inconvénient.

Le document CH217284 décrit une boîte de montre dans laquelle le fond et la glace sont assemblés à l'aide de parois inclinées de l'extérieur vers l'intérieur de la boîte de montre.

### RESUME DE L'INVENTION

L'invention a donc pour but principal de pallier les inconvénients de l'état de la technique décrit ci-dessus en proposant une boîte de montre étanche à l'eau adaptée pour supporter les fortes pression d'eau pour une plongée à de grandes profondeurs sous l'eau.

A cet effet, la présente invention concerne une boîte de montre étanche à l'eau, qui comprend les caractéristiques de la revendication indépendante 1.

Des formes particulières d'exécution d'une boîte de montre étanche à l'eau sont définies dans les revendications dépendantes 2 à 13.

Un avantage de la boîte de montre étanche à l'eau réside dans le fait qu'une surface d'appui annulaire du fond inclinée vers l'intérieur de la boîte de montre vient en contact d'une surface intérieure annulaire de la carrure de forme complémentaire à la surface d'appui annulaire lors du montage du fond sur la carrure. Les surfaces d'appui et intérieure sont inclinées vers l'intérieur de la boîte de montre d'un angle déterminé plus petit que 90° par rapport à un axe central perpendiculaire à un plan de boîte de montre. Dans le cas d'une carrure de forme générale cylindrique, les surfaces d'appui et intérieure sont de forme conique. Ceci permet d'avoir une bonne répartition des contraintes entre le fond et la carrure dues à la pression de l'eau lors d'une plongée à de grandes profondeurs sous l'eau.

Un avantage de la boîte de montre étanche à l'eau réside dans le fait que la glace est fixée à la carrure par l'intermédiaire d'un joint et avec des surfaces de contact inclinées de la carrure et de la glace. Dans le cas d'une carrure de forme générale cylindrique, des surfaces d'appui coniques sont prévues sur la glace et la carrure. De cette manière, des efforts de pression sur la glace sont transmis à la carrure via des surfaces d'appui coniques.

### BREVE DESCRIPTION DES FIGURES

Les buts, avantages et caractéristiques d'une boîte de montre étanche à l'eau apparaîtront mieux dans la description suivante de manière non limitative en regard des dessins sur lesquels :
- les figures 1a et 1b représentent de manière simplifiée une coupe transversale d'une première variante d'une montre avec une boîte étanche à l'eau selon l'invention, et une coupe partielle de détail de la fixation de la glace à la carrure de la première variante selon l'invention, et
- les figures 2a et 2b représentent de manière simplifiée une coupe transversale d'une seconde variante d'une montre avec une boîte étanche à l'eau selon l'invention, et une coupe partielle de détail de la fixation de la glace à la carrure de la seconde variante selon l'invention,

### DESCRIPTION DETAILLEE DE L'INVENTION

Dans la description suivante, tous les composants d'une boîte de montre étanche à l'eau notamment d'une montre de plongée, qui sont bien connus d'un homme du métier dans ce domaine technique ne sont relatés que de manière simplifiée.

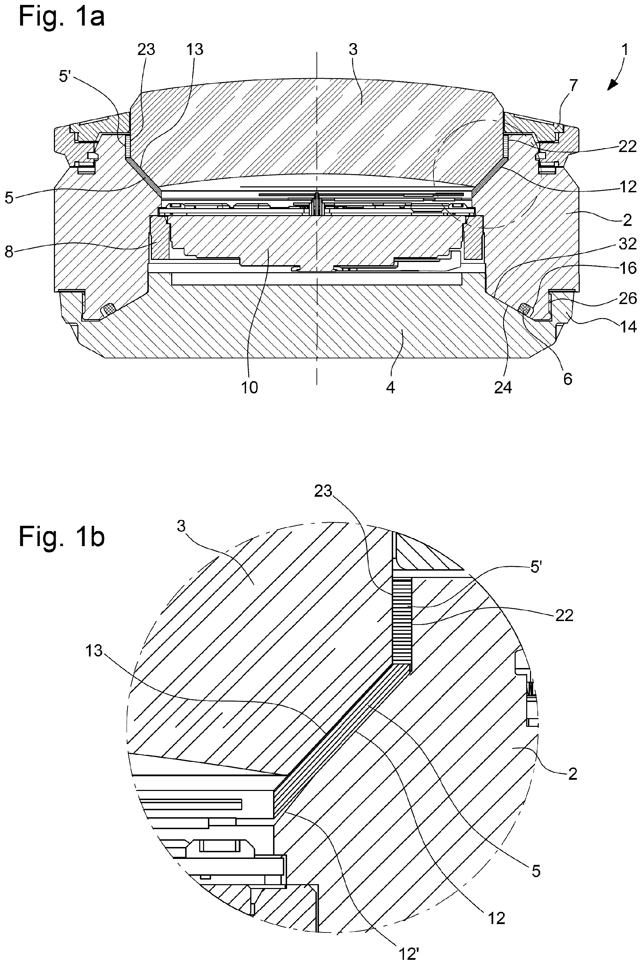

Les figures 1a et 1b représentent une première variante d'une boîte de montre 1, qui peut être utilisée pour une montre de plongée. La boîte de montre 1 comprend essentiellement une glace 3, qui peut être en saphir ou en verre minéral, fixée sur un côté supérieur d'une carrure 2, et un fond 4 monté sur un côté inférieur de la carrure 2. Une lunette 7 peut encore être montée sur le côté supérieur de la carrure 2. Un mouvement ou module horloger 10 est disposé dans la boîte de montre 1 dans un cercle d'emboîtage 8, et au moins un organe de contrôle non représenté peut être monté de manière étanche en position de repos sur ou à travers la carrure 2 pour le réglage de l'heure, de la date ou d'autres fonctions de la montre de plongée.

Selon la première variante, le fond 4 comprend un moyen de fixation, tel qu'un bord annulaire 14 pour être monté sur le côté inférieur de la carrure 2. Une surface d'appui annulaire 24 du fond 4 vient en contact d'une surface intérieure annulaire 32 de la carrure 2 de forme complémentaire à la surface d'appui 24 lors du montage du fond 4 sur la carrure 2. Les surfaces d'appui 24 et intérieure 32 sont inclinées vers l'intérieur de la boîte de montre 1 d'un angle déterminé plus petit que 90° par rapport à un axe central perpendiculaire à un plan de boîte de montre 1.

Dans le cas d'une carrure 2 de forme générale cylindrique, les surfaces 24, 32 sont de forme conique et inclinées vers l'intérieur de la boîte de montre 1 d'un angle déterminé plus petit que 90° par rapport à un axe central de la boîte de montre 1. Cela signifie que le sommet de chaque forme de cône est en direction de l'intérieur de la boîte de montre 1. Le côté inférieur de la carrure 2 comprend encore une rainure annulaire 16 logeant une garniture d'étanchéité 6 de forme torique (Butadiène Caoutchouc Nitrile) en contact de la surface d'appui 24 du fond 4 lors du montage du fond 4 sur la carrure 2. De préférence, le bord annulaire 14 du fond 4 comprend un taraudage intérieur pour être vissé sur un taraudage 26 sur le côté inférieur de la carrure 2. Pour une carrure 2 et un fond 4 massif, réalisés dans un matériau, tel que le titane, l'angle peut être de l'ordre de 60° ± 5° par rapport à l'axe central. Ceci permet d'avoir une bonne répartition des contraintes entre le fond 4 massif et la carrure 2 dues à la pression de l'eau lors d'une plongée à de grandes profondeurs sous l'eau.

Il est à noter que le fond 4 peut aussi être en saphir ou en verre minéral comme la glace 3 pour avoir une structure de boîte de montre 1 squelettique afin de visionner l'intérieur de la montre de plongée.

La glace 3 comprend une surface périphérique annulaire 13 pour être montée par l'intermédiaire d'au moins une partie d'un joint 5, 5' de forme annulaire sur une surface intérieure annulaire 12 du côté supérieur de la carrure 2. La surface intérieure annulaire 12 est de préférence de forme complémentaire à la surface périphérique annulaire 13. La surface périphérique annulaire 13 de la glace 3 est inclinée d'un angle défini plus petit que 90° par rapport à un axe perpendiculaire à un plan de boîte de montre 1. De préférence, la surface intérieure annulaire 12 est inclinée généralement vers l'intérieur de la boîte de montre 1 d'un même angle que la surface périphérique annulaire 13 par rapport à un axe central.

Si la carrure 2 est de forme générale cylindrique, la surface intérieure périphérique 13 et la surface intérieure annulaire 12 sont de forme conique et inclinées d'un angle défini vers l'intérieur de la boîte de montre. Cela signifie que le sommet de chaque forme de cône est en direction de l'intérieur de la boîte de montre 1. L'angle défini d'inclinaison des surfaces 12 et 13 peut être de l'ordre de 43° ± 5° par rapport à l'axe central. Ceci permet d'avoir une bonne répartition des contraintes entre la glace 3 et la carrure 2 dues à la pression de l'eau lors d'une plongée à de grandes profondeurs sous l'eau. La différence de pression de l'eau par rapport à la pression à l'intérieur de la boîte de montre 1 a tendance à fermer tout interstice entre les surfaces 12, 13 en contact et le joint 5, 5' de fixation grâce à l'inclinaison des surfaces de contact vers l'intérieur de la boîte de montre 1. Cela garantit une bonne étanchéité et une résistance à de fortes pressions.

Dans cette première variante, le joint 5, 5' de fixation peut de préférence être composé d'une première partie 5 en métal amorphe ou verre métallique ou alliage métallique amorphe et d'une seconde partie 5' réalisée en polymère (par exemple en polyuréthane) pour la retenue de la glace 3. Le joint 5, 5' de fixation est de forme annulaire pour la fermeture hermétique de la glace 3 sur la carrure 2. Pour une carrure 2 de forme générale cylindrique, la première partie 5 du joint est de forme conique, alors que la seconde partie 5' est liée sur le bord supérieur de la première partie 5 et est cylindrique. Une fois la glace 3 fixée sur la carrure 2, la première partie 5 relie en appui les surfaces inclinées de la carrure 2 et de la glace 3, alors que la seconde partie 5' est attachée à une paroi intérieure annulaire 22 de la carrure 2 et une paroi extérieure annulaire 23 de la glace 3 au-dessus de la surface périphérique annulaire 13 de la glace 3. De préférence, la seconde partie 5' s'arrête à mi-hauteur de la glace 3 juste en dessous de la lunette 7, alors que la première partie 5 du joint se prolonge au-dessous du niveau de la liaison entre le bas de la glace 3 et la carrure 2.

A titre non limitatif, la longueur de la première partie 5 en section transversale peut être de l'ordre de 5 mm, alors que la hauteur de la seconde partie du joint 5, 5' peut être de l'ordre de 2.5 mm. L'épaisseur du joint peut être de l'ordre de 0.65 mm.

Normalement si le joint 5, 5' de fixation de forme annulaire est réalisé avant la fixation de la glace 3 sur la carrure 2, c'est principalement la seconde partie 5' du joint qui sert à maintenir la glace 3 à la carrure 2, alors que la première partie 5 du joint est du type porteur de la glace 3 sur la carrure 2. Cependant il peut aussi être imaginé d'avoir les deux parties séparées de manière à permettre de fixer à chaud la première partie 5 à la carrure 2 et à la glace 3 avant de réaliser la seconde partie 5' du joint sur la première partie 5 pour retenir la glace 3 par la paroi extérieure annulaire 23 à la paroi intérieure 22 de la carrure 2, ce qui garantit aussi une bonne étanchéité.

Lorsque la boîte de montre 1 est plongée sous l'eau à de grandes profondeurs, cela permet de fermer tout espace entre la glace 3 et la carrure 2 grâce aux surfaces inclinées 12 et 13 de la glace 3 et de la carrure 2 et par l'intermédiaire de la première partie métallique 5 du joint. Une bonne répartition des contraintes est donc réalisée entre la glace 3 et la carrure 2 grâce à la première partie métallique 5 du joint, qui est en métal amorphe ou alliage métallique amorphe.

Il est encore à noter que la surface intérieure annulaire 12 de la carrure 2 est inclinée vers l'intérieur de la boîte de montre 1 et se termine par une surface courbée 12' vers l'intérieur sur environ 3° à la suite de la surface intérieure annulaire 12. Ainsi la première partie 5 du joint n'est plus en contact direct avec cette surface courbée 12'. Par contre, lorsque la pression d'eau augmente de manière substantielle en plongée, la première partie 5 du joint est poussée par la glace 3 vers l'intérieur pour contacter ou épouser la surface courbée 12'. Cela permet ainsi d'éviter que la pression du coin intérieur de la glace 3 concentre les contraintes dans la première partie 5 du joint en risquant de le casser.

Plusieurs types d'alliages métallique amorphe peuvent être utilisés pour réaliser la première partie métallique 5 du joint. Dans les cas les plus fréquents, l'alliage métallique amorphe peut être principalement composé de zirconium, ce qui permet de former le joint à une température supérieure à 350°, c'est-à-dire supérieure à la température de transition vitreuse de l'alliage. L'alliage métallique amorphe à base de zirconium peut être composé de Zr(52.5%), Cu(17.6%), Ni(14.9%), Al(10%) et Ti(5%). L'alliage métallique amorphe à base de zirconium peut aussi comprendre Zr(58.5%), Cu(15.6%), Ni(12.8%), Al(10.3%) et Nb(2.8%). L'alliage métallique amorphe à base de zirconium peut aussi comprendre Zr(44%), Ti(11%), Cu(9.8%), Ni(10.2%) et Be(25%), ou finalement Zr(58%), Cu(22%), Fe(8%) et Al(12%). De préférence, pour faciliter la réalisation d'un tel joint, l'alliage métallique amorphe peut être principalement composé de platine (Pt), ce qui permet de former le joint à une température supérieure à 230°C. L'alliage métallique amorphe à base de platine peut comprendre Pt(57.5%), Cu(14.7%), Ni(5.3%) et P(22.5%). Il peut aussi être prévu de réaliser le joint métallique monobloc 5, 5' en alliage métallique amorphe à base principalement de palladium (Pd), ce qui permet de former le joint à une température supérieure à 300°C.

On peut citer encore d'autres alliages de métaux amorphes. Un alliage métallique amorphe à base de titane peut comprendre Ti(41.5%), Zr(10%), Cu(35%), Pd(11%) et Sn(2.5%). Un alliage métallique amorphe à base de palladium peut comprendre Pd(43%), Cu(27%), Ni(10%) et P(20%), ou Pd(77%), Cu(6%) et Si(16.5%), ou finalement Pd(79%), Cu(6%), Si(10%) et P(5%). Un alliage métallique amorphe à base de nickel peut comprendre Ni(53%), Nb(20%), Ti(10%), Zr(8%), Co(6%) et Cu(3%), ou Ni(67%), Cr(6%), Fe(4%), Si(7%), C(0.25%) et B(15,75%), ou finalement Ni(60%), Pd(20%), P(17%) et B(3%). Un alliage métallique amorphe à base de fer peut comprendre Fe(45%), Cr(20%), Mo(14%), C(15%) et B(6%), ou Fe(56%), Co(7%), Ni(7%), Zr(8%), Nb(2%) et B(20%). Un alliage métallique amorphe à base d'or peut comprendre Au(49%), Ag(5%), Pd(2.3%), Cu(26.9%) et Si(16.3%).

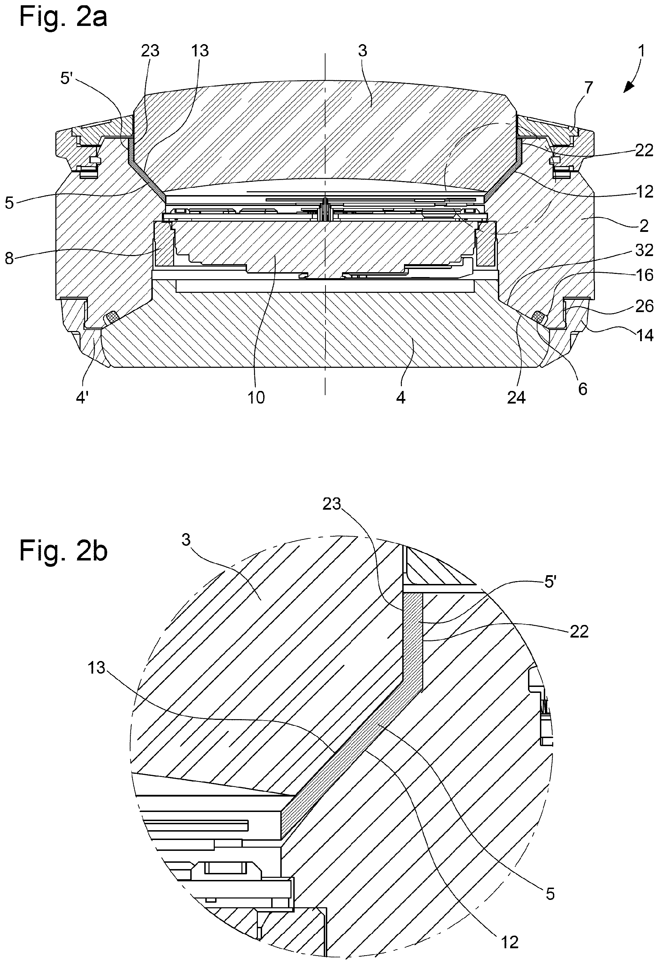

Les figures 2a et 2b représentent une seconde variante d'une boîte de montre 1, qui peut être utilisée pour une montre de plongée. Comme la majeure partie des éléments de cette seconde variante sont identiques à la première variante expliquée en référence aux figures 1a et 1b, ils ne seront pas répétés. Les différences sont d'une part au niveau du moyen de fixation du fond 4 sur le côté inférieur de la carrure 2 et au niveau du joint métallique 5, 5' pour la fixation de la glace 3 à la carrure 2.

Le fond 4 massif est fixé à la carrure 2 par l'intermédiaire d'une bague 4' en tant que moyen de fixation. Cette bague 4' est munie d'une surface intérieure d'appui venant en contact d'une surface externe périphérique du fond 4, qui est de préférence de forme complémentaire. La surface intérieure d'appui de la bague 4' est courbée ou inclinée vers le centre du fond 4. La bague 4' comprend encore un bord annulaire 14 ayant un taraudage intérieur pour être vissé sur un taraudage 26 sur le côté inférieur de la carrure 2 lors du montage du fond 4, en appui sur la surface intérieure d'appui de la bague 4', sur la carrure 2. La bague 4 peut être d'un même matériau que le fond 4 ou d'un autre matériau métallique.

Dans le cas d'une carrure de forme générale cylindrique, le joint 5, 5' de fixation de forme annulaire est composé entièrement en métal amorphe ou verre métallique ou alliage métallique amorphe. Il comprend une première partie 5 du joint de forme conique, et une seconde partie 5' cylindrique liée sur le bord supérieur de la première partie 5 pour former une seule pièce. La forme générale du joint 5, 5' de fixation est identique à celle des figures 1a et 1b, et il en est de même pour l'angle d'inclinaison des surfaces 12, 13. De préférence, la glace 3 est fixée à chaud à la carrure 2 par le joint 5, 5' en métal amorphe.

A titre informatif, la réalisation d'un tel joint 5, 5' en métal amorphe peut être faite par différents procédés de mise en forme soit :
- directement à partir du métal en fusion tels que par exemple, l'injection sous pression, la coulée gravitationnelle, la coulée centrifuge, la coulée antigravitationnelle, la coulée par succion, la fabrication additive de poudre
- à partir de préformes amorphes par déformation à chaud au-dessus de la température de transition vitreuse comme par exemple, le formage électromagnétique, le formage par décharge capacitive, le formage sous pression de gaz, le formage mécanique. L'objectif de cette étape est d'obtenir une préforme ayant les bonnes dimensions et ayant une proportion de phase amorphe suffisante pour permettre sa déformation lors de l'étape d'assemblage décrite ci-après.

Il est encore à relever qu'avec la fixation de la glace 3 sur la carrure 2 des variantes de réalisation décrites ci-dessus et avec le contact de surfaces coniques entre la glace 3 et la carrure 2, il est garanti une bonne étanchéité et une bonne répartition des contraintes entre la glace 3 et la carrure 2. Il en est de même avec le contact des surfaces coniques du fond 4 et de la carrure 2. Ceci est nécessaire étant donné que la montre est une montre de plongée qui doit supporter de fortes contraintes dues à la différence de pression entre l'intérieur de montre et la pression de l'eau en grande profondeur sous l'eau. Comme les surfaces de contact entre la carrure 2, le joint 5, 5' et la glace 3, ou entre la carrure 2 et le fond 4 sont assez grandes avec ces formes coniques, il y a une meilleure transmission des contraintes sur une plus grande surface. Ceci est important pour garantir l'étanchéité de la montre lors d'une plongée profonde sous l'eau. Avec ces agencements, la pression de l'eau sur la boîte de montre 1 tend à fermer tout interstice entre les surfaces de contact. De plus, cela évite l'extrusion du joint 5, 5' de fixation.

A partir de la description qui vient d'être faite, plusieurs variantes de réalisation de la boîte de montre peuvent être conçues par l'homme du métier sans sortir du cadre de l'invention définie par les revendications. La boîte de montre par sa carrure peut avoir une forme générale différente d'un cylindre.

## Revendications

1. Boîte de montre (1) étanche à l'eau, notamment pour une montre de plongée, la boîte (1) comprenant une carrure (2), au moins un fond (4) monté sur un côté inférieur de la carrure (2), et une glace (3) et un joint (5, 5') pour le montage de la glace sur un côté supérieur de la carrure (2),
dans laquelle le fond (4) comprend une surface d'appui annulaire (24) pour venir en contact d'une surface intérieure annulaire (32) de la carrure (2) de forme complémentaire à la surface d'appui (24) lors du montage du fond (4) sur la carrure (2),
dans laquelle la surface d'appui annulaire (24) et la surface intérieure annulaire (32) sont inclinées vers l'intérieur de la boîte de montre (1) d'un angle déterminé plus petit que 90° par rapport à un axe central perpendiculaire à un plan de boîte de montre (1) de manière à répartir des contraintes entre le fond (4) et la carrure (2) dues à la pression de l'eau lors d'une plongée, et
dans laquelle la glace (3) comprend une surface périphérique annulaire (13) de forme conique agencée pour être montée par l'intermédiaire d'au moins une première partie dudit joint (5) sur une surface intérieure annulaire (12) de forme complémentaire du côté supérieur de la carrure (2), la surface périphérique annulaire (13) de la glace (3) étant inclinée de l'extérieur vers l'intérieur de la boîte de montre (1) d'un angle défini plus petit que 90° par rapport à un plan de surface de la glace (3) et à un axe central perpendiculaire à un plan de boîte de montre, une seconde partie du joint (5') étant en contact entre une paroi intérieure annulaire (22) de forme cylindrique de la carrure (2) au-dessus de la surface intérieure annulaire (12) et une paroi extérieure annulaire (23) de forme cylindrique de la glace (3) au-dessus de la surface périphérique annulaire (13) de manière à répartir des contraintes entre la glace (3) et la carrure (2) dues à la pression de l'eau lors d'une plongée.

2. Boîte de montre (1) selon la revendication 1, **caractérisée en ce que** la surface d'appui annulaire (24) du fond (4) et la surface intérieure annulaire (32) de la carrure (2) sont de forme conique.

3. Boîte de montre (1) selon l'une des revendications 1 et 2, **caractérisée en ce que** l'angle déterminé d'inclinaison des surfaces d'appui (24) annulaire du fond et intérieure (32) annulaire de la carrure est de l'ordre de 60° ± 5° par rapport à l'axe central.

4. Boîte de montre (1) selon l'une des revendications 1 et 2, **caractérisée en ce que** le côté inférieur de la carrure (2) comprend encore une rainure annulaire (16) logeant une garniture d'étanchéité (6) en contact de la surface d'appui (24) lors du montage du fond (4) sur la carrure (2).

5. Boîte de montre (1) selon la revendication 4, **caractérisée en ce que** le fond (4) comprend un bord annulaire (14) ayant un taraudage intérieur pour être vissé sur un taraudage (26) sur le côté inférieur de la carrure (2) lors du montage du fond (4) sur la carrure (2).

6. Boîte de montre (1) selon la revendication 4, **caractérisée en ce qu'**une bague (4') est prévue pour le montage du fond (4) à la carrure (2), **en ce que** la bague (4') est munie d'une surface intérieure d'appui venant en contact d'une surface externe périphérique du fond (4), qui est de forme complémentaire, et **en ce que** la bague (4') comprend un bord annulaire (14) ayant un taraudage intérieur pour être vissé sur un taraudage (26) sur le côté inférieur de la carrure (2).

7. Boîte de montre (1) selon la revendication 1, **caractérisée en ce que** la partie du joint (5, 5') de fixation entre la surface périphérique annulaire (13) et la surface intérieure annulaire (12) est en métal amorphe ou en alliage métallique amorphe.

8. Boîte de montre (1) selon la revendication 1, **caractérisée en ce que** les parois annulaires (22, 23) sont parallèles à l'axe central.

9. Boîte de montre (1) selon la revendication 1, **caractérisée en ce que** la première partie (5) du joint de fixation est en métal amorphe ou en alliage métallique amorphe, et **en ce que** la seconde partie (5') du joint de fixation est en polyuréthane pour fixer la glace (3) à la carrure (2).

10. Boîte de montre (1) selon l'une des revendications 7 et 9, **caractérisée en ce que** l'alliage métallique amorphe d'au moins une partie du joint (5, 5') de fixation est à base principalement de zirconium.

11. Boîte de montre (1) selon l'une des revendications 7 et 9, **caractérisée en ce que** l'alliage métallique amorphe d'au moins une partie du joint (5, 5') de fixation est à base principalement de platine.

12. Boîte de montre (1) selon l'une des revendications 7 et 9, **caractérisée en ce que** l'alliage métallique amorphe d'au moins une partie du joint (5, 5') de fixation est à base principalement de palladium.

13. Boîte de montre (1) selon la revendication 12, **caractérisée en ce que** l'angle défini d'inclinaison de la surface périphérique annulaire (13) de la glace (3) et de la surface intérieure annulaire (12) de la carrure (2) est de l'ordre de 43° ± 5° par rapport à l'axe central.

## Patentansprüche

1. Wasserdichtes Armbanduhrgehäuse (1), insbesondere für eine Taucheruhr, wobei das Gehäuse (1) einen Mittelteil (2), mindestens einen Boden (4), der an einer Unterseite des Mittelteils (2) montiert ist, und ein Glas (3) und eine Fuge (5, 5') für die Montage des Glases auf einer Oberseite des Mittelteils (2) umfasst,
wobei der Boden (4) eine ringförmige Auflageoberfläche (24) umfasst, um bei der Montage des Bodens (4) auf dem Mittelteil (2) in Kontakt mit einer ringförmigen Innenoberfläche (32) des Mittelteils (2) in einer ergänzenden Form zur Auflageoberfläche (24) zu kommen,
wobei die ringförmige Auflageoberfläche (24) und die ringförmige Innenoberfläche (32) um einen bestimmten Winkel kleiner als 90° in Bezug auf eine mittlere Achse senkrecht zu einer Ebene eines Armbanduhrgehäuses (1) ins Innere des Armbanduhrgehäuses (1) geneigt sind, um Spannungen zwischen dem Boden (4) und dem Mittelteil (2) aufgrund des Drucks des Wassers bei einem Tauchgang zu verteilen, und
wobei das Glas (3) eine ringförmige periphere Oberfläche (13) in einer konischen Form umfasst, die angeordnet ist, um anhand mindestens eines ersten Teils der Fuge (5) auf einer ringförmigen Innenoberfläche (12) in ergänzender Form zur Oberseite des Mittelteils (2) montiert zu werden,
wobei die ringförmige periphere Oberfläche (13) des Glases (3) um einen definierten Winkel kleiner als 90° in Bezug auf eine Oberflächenebene des Glases (3) und einer mittleren Achse senkrecht zu einer Ebene eines Armbanduhrgehäuses von außerhalb ins Innere des Armbanduhrgehäuses (1) geneigt ist, wobei ein zweiter Teil der Fuge (5') in Kontakt zwischen einer ringförmigen Innenwand (22) in zylindrischer Form des Mittelteils (2) oberhalb der ringförmigen Innenoberfläche (12) und einer ringförmigen Außenwand (23) in zylindrischer Form des Glases (3) oberhalb der ringförmigen peripheren Oberfläche (13) ist, um Spannungen zwischen dem Glas (3) und dem Mittelteil (2) aufgrund des Drucks des Wassers bei einem Tauchgang zu verteilen.

2. Armbanduhrgehäuse (1) nach Anspruch 1, **dadurch gekennzeichnet, dass** die ringförmige Auflageoberfläche (24) des Bodens (4) und die ringförmige Innenoberfläche (32) des Mittelteils (2) in konischer Form sind.

3. Armbanduhrgehäuse (1) nach einem der Ansprüche 1 und 2, **dadurch gekennzeichnet, dass** der bestimmte Neigungswinkel der ringförmigen Auflageoberfläche (24) des Bodens und Innenoberfläche (32) des Mittelteils in der Größenordnung von 60° ± 5° in Bezug auf die mittlere Achse ist.

4. Armbanduhrgehäuse (1) nach einem der Ansprüche 1 und 2, **dadurch gekennzeichnet, dass** die Innenseite des Mittelteils (2) weiter eine ringförmige Nut (16) umfasst, die eine Abdichtung (6) in Kontakt mit der Auflageoberfläche (24) bei der Montage des Bodens (4) auf dem Mittelteil (2) einstellt.

5. Armbanduhrgehäuse (1) nach Anspruch 4, **dadurch gekennzeichnet, dass** der Boden (4) einen ringförmigen Rand (14) umfasst, der ein Innengewinde aufweist, um bei der Montage des Bodens (4) auf dem Mittelteil (2) auf ein Gewinde (26) auf der Innenseite des Mittelteils (2) geschraubt zu werden.

6. Armbanduhrgehäuse (1) nach Anspruch 4, **dadurch gekennzeichnet, dass** ein Ring (4') für die Montage des Bodens (4) an dem Mittelteil (2) vorgesehen ist, dadurch dass der Ring (4') mit einer inneren Auflageoberfläche versehen ist, die in Kontakt mit einer peripheren Außenoberfläche des Bodens (4) kommt, die in ergänzender Form ist, und dadurch, dass der Ring (4') einen ringförmigen Rand (14) umfasst, der ein Innengewinde aufweist, um auf ein Gewinde (26) auf der Innenseite des Mittelteils (2) geschraubt zu werden.

7. Armbanduhrgehäuse (1) nach Anspruch 1, **dadurch gekennzeichnet, dass** der Teil der Befestigungsfuge (5, 5') zwischen der ringförmigen peripheren Oberfläche (13) und der ringförmigen Innenoberfläche (12) aus amorphem Metall oder aus einer amorphen Metalllegierung ist.

8. Armbanduhrgehäuse (1) nach Anspruch 1, **dadurch gekennzeichnet, dass** die ringförmigen Wände (22, 23) parallel zur mittleren Achse sind.

9. Armbanduhrgehäuse (1) nach Anspruch 1, **dadurch gekennzeichnet, dass** der erste Teil (5) der Befestigungsfuge aus amorphem Metall oder einer amorphen Metalllegierung ist, und dadurch, dass der zweite Teil (5') der Befestigungsfuge aus Polyurethan ist, um das Glas (3) an dem Mittelteil (2) zu befestigen.

10. Armbanduhrgehäuse (1) nach einem der Ansprüche 7 und 9, **dadurch gekennzeichnet, dass** die amorphe Metalllegierung mindestens eines Teils der Befestigungsfuge (5, 5`) in erster Linie auf Basis von Zirkonium ist.

11. Armbanduhrgehäuse (1) nach einem der Ansprüche 7 und 9, **dadurch gekennzeichnet, dass** die amorphe Metalllegierung mindestens eines Teils der Befestigungsfuge (5, 5') in erster Linie auf Basis von Platin ist.

12. Armbanduhrgehäuse (1) nach einem der Ansprüche 7 und 9, **dadurch gekennzeichnet, dass** die amorphe Metalllegierung mindestens eines Teils der Befestigungsfuge (5, 5`) in erster Linie auf Basis von Palladium ist.

13. Armbanduhrgehäuse (1) nach Anspruch 12, **dadurch gekennzeichnet, dass** der definierte Neigungswinkel der ringförmigen peripheren Oberfläche (13) des Glases (3) und der ringförmigen Innenoberfläche (12) des Mittelteils (2) in der Größenordnung von 43° ± 5° in Bezug auf die mittlere Achse ist.

## Claims

1. A water-resistant watch case (1), in particular for a diving watch, the case (1) comprising a middle part (2), at least one back (4) mounted on a lower side of the middle part (2), and a crystal (3) and a gasket (5, 5') for mounting the crystal on an upper side of the middle part (2),
in which the back (4) comprises an annular bearing surface (24) for coming into contact with an inner annular surface (32) of the middle part (2) of a shape complementary to the bearing surface (24) when mounting the back (4) on the middle part (2),
in which the annular bearing surface (24) and the inner annular surface (32) are inclined towards the inside of the watch case (1) at a determined angle less than 90° relative to a central axis perpendicular to a plane of the watch case (1) so as to distribute stresses between the back (4) and the middle part (2) due to the water pressure during a diving, and
in which the crystal (3) comprises an annular peripheral surface (13) of a conical shape arranged to be mounted by means of at least one first portion of said gasket (5) on an inner annular surface (12) of a shape complementary to the upper side of the middle part (2), the annular peripheral surface (13) of the crystal (3) being inclined towards the inside of the watch case (1) at a defined angle less than 90° relative to a surface plane of the crystal (3) and to a central axis perpendicular to a plane of the watch case, a second portion of the gasket (5') being in contact between an inner annular wall (22) of cylindrical shape of the middle part (2) above the inner annular surface (12) and an outer annular wall (23) of cylindrical shape of the crystal (3) above the annular peripheral surface (13) so as to distribute stresses between the crystal (3) and the middle part (2) due to the water pressure during a dive.

2. The watch case (1) according to claim 1, **characterised in that** the annular bearing surface (24) of the back (4) and the inner annular surface (32) of the middle part (2) are conical in shape.

3. The watch case (1) according to one of claims 1 and 2, **characterised in that** the determined angle of inclination of the annular bearing (24) of the back and the inner annular (32) surfaces is of the order of 60° ± 5° relative to the central axis.

4. The watch case (1) according to one of claims 1 and 2, **characterised in that** the lower side of the middle part (2) further comprises an annular groove (16) housing a packing (6) in contact of the bearing surface (24) during the mounting of the back (4) on the middle part (2).

5. The watch case (1) according to claim 4, **characterised in that** the back (4) comprises an annular rim (14) having an internal tapping to be screwed onto a tapping (26) on the lower side of the middle part (2) during the mounting of the back (4) on the middle part (2).

6. The watch case (1) according to claim 4, **characterised in that** a ring (4') is provided for mounting the back (4) to the middle part (2), **in that** the ring (4') is provided with an inner bearing surface coming into contact with a peripheral outer surface of the back (4), which is of complementary shape, and **in that** the ring (4') comprises an annular rim (14) having an internal tapping to be screwed onto a tapping (26) on the lower side of the middle part (2).

7. The watch case (1) according to claim 1, **characterised in that** the portion of the fastening gasket (5, 5') between the annular peripheral surface (13) and the inner annular surface (12) is made of amorphous metal or of amorphous metal alloy.

8. The watch case (1) according to claim 1, **characterised in that** the annular walls (22, 23) are parallel to the central axis.

9. The watch case (1) according to claim 1, **characterised in that** the first portion (5) of the fastening gasket is made of amorphous metal or of amorphous metal alloy, and **in that** the second portion (5') of the fastening gasket is made of polyurethane to fasten the crystal (3) to the middle part (2).

10. The watch case (1) according to one of claims 7 and 9, **characterised in that** the amorphous metal alloy of at least one portion of the fastening gasket (5, 5') is based mainly on zirconium.

11. The watch case (1) according to one of claims 7 and 9, **characterised in that** the amorphous metal alloy of at least one portion of the fastening gasket (5, 5') is based mainly on platinum.

12. The watch case (1) according to one of claims 7 and 9, **characterised in that** the amorphous metal alloy of at least one portion of the fastening gasket (5, 5') is based mainly on palladium.

13. The watch case (1) according to claim 12, **characterised in that** the defined angle of inclination of the annular peripheral surface (13) of the crystal (3) and of the inner annular surface (12) of the middle part (2) is of the order of 43° ± 5° relative to the central axis.
